# EUROPÄISCHE PATENTSCHRIFT

(11) **EP 2 661 185 B1**
(45) Veröffentlichungstag und Bekanntmachung des Hinweises auf die Patenterteilung: **22.10.2014**
(21) Anmeldenummer: 12732172.7
(22) Anmeldetag: 05.01.2012
(51) Int. Cl.: B29C 45/00, A43B 5/04

(54) **Schuh mit einem schalenförmigen Element**
Boot with an element in shell form
Chaussure dotée d'un élément en forme de coque

(30) Priorität: 07.01.2011 AT 232011
(43) Veröffentlichungstag der Anmeldung: 13.11.2013
(73) Patentinhaber: Fischer Sports GmbH, 4910 Ried im Innkreis (AT)
(72) Erfinder: PIEBER, Alois, A-4921 Hohenzell (AT); RESCH, Franz Josef, A-8970 Schladming (AT)
(74) Vertreter: Sonn & Partner Patentanwälte
(86) Internationale Anmeldenummer: PCT/AT2012/000003
(87) Internationale Veröffentlichungsnummer: WO 2012/092638

(56) Entgegenhaltungen:
- US-A- 5 786 057
- US-A1- 2004 235 586
- US-A1- 2005 124 741
- US-A1- 2008 000 109

## Beschreibung

Die Erfindung betrifft einen Skischuh, insbesondere Alpin- oder Langlaufschuh, mit einem schalenförmigen Element, das zumindest teilweise aus einem Kunststoff-Compound- Werkstoff besteht, sowie ein Verfahren zur Herstellung eines derartigen Elements.

Schuhe mit zumindest einem schalenförmigen Element, d.h. insbesondere Skischuhe für den alpinen Skilauf und Langlaufschuhe, sind hinlänglich bekannt; so ist aus der US 5 786 057 ein Schuh mit einem schalenförmigen Element bekannt, das zumindest teilweise aus einem Kunststoff-Compound-Werkstoff besteht. Unter einem schalenförmigen Element wird in Zusammenhang mit der gegenständlichen Erfindung jedes den Fuß bzw. den Unterschenkel zumindest teilweise abdeckende Element verstanden.

Als Material für diese relativ harten Elemente von derartigen Schuhen, welche üblicherweise im Spritzgussverfahren hergestellt werden, werden üblicherweise thermoplastische Elastomere verwendet. Hierbei haben sich wiederum in den letzten zwei Jahrzehnten insbesondere zwei Materialgruppen herausgebildet, welche bevorzugt insbesondere für Schuhe für den hochsportlichen Bereich eingesetzt werden.

Zum einen sind dies thermoplastische Polyurethane sowohl auf Polyestherpolyolbasis wie auch auf Polyetherpolyolbasis. Derartige Werkstoffe bestehen aus Hartsegmenten, welche im Fall von Polyurethan aus Isozyanaten gebildet werden, und Weichkomponenten, welche üblicherweise durch Polyestherpolyol oder Polyetherpolyol gebildet werden. Derartige Werkstoffe haben grundsätzlich gute kälteelastische Eigenschaften und sind auch in verschiedenen Härten bzw. Steifigkeiten herstellbar; sie weisen jedoch insbesondere zwei Nachteile auf.

Zum einen ist insbesondere nachteilig, dass das Steifigkeitstemperaturverhalten im Bereich von +20°C bis -20°C, d.h. jenem Temperaturbereich, in welchem Schuhe für den Alpin- als auch für den Langlauf üblicherweise eingesetzt werden, relativ schlecht ist, d.h. dass diese Werkstoffe in diesem Bereich in der Regel um ca. 400% versteifen. Demzufolge ergibt sich für den Benutzer eine stark unterschiedliche Steifigkeit des Schuhs abhängig von der jeweiligen Temperatur. Insbesondere ist dies dahingehend nachteilig, da der spätere Benutzer, der den Schuh üblicherweise zunächst als Kunde in einem Sportgeschäft anprobiert, in welchem es üblicherweise um ca. 20°C Raumtemperatur hat; hierbei fühlt sich der Schuh komfortabel und weich an, bei späterer Verwendung des Schuhs im Rahmen des Skilaufs, welcher in der Regel bei Minustemperaturen ausgeführt wird, ist der Schuh jedoch sodann deutlich steifer, was vom Benutzer häufig als unangenehm empfunden wird. Zudem ist bei derartigen Schuhen, die im Spritzgussverfahren hergestellte schalenförmige Elemente aus Polyurethan aufweisen, nachteilig, dass zur Anpassung der Elemente an den Fuß des Benutzers Temperaturen von >165°C erforderlich sind, um das Material mittels Vakuum oder Druck warmverformen zu können. Derartige Temperaturen sind jedoch nicht akzeptabel, um die schalenförmigen Elemente direkt an den menschlichen Fuß anzupassen. Weiters tritt bei derartig hohen Temperaturen unter Einfluss von Luftsauerstoff ein oxidativer Molekularabbau auf, d.h. die Materialeigenschaften wie Steifigkeit und Elastizität verändern sich.

Die zweite Materialgruppe, die für die Herstellung von schalenförmigen Elementen von Schuhen verwendet wird, sind Polyamid Elastomere, welche insbesondere unter den Markennamen Pebax oder Vestamid bekannt sind. Bei derartigen Materialien bestehen die Hartsegmente üblicherweise aus PA 11 (11-Aminoundecansäure) oder PA 12 (Laurinlactam oder Omega-Aminodecansäure). Als Weichsegment wird üblicherweise Polyether eingesetzt. Der Vorteil der Polyamid Elastomere gegenüber den vorstehend beschriebenen thermoplastischen Polyurethanen besteht darin, dass sich die Materialsteifigkeit im Temperaturbereich von +20°C bis -20°C - im Vergleich zu thermoplastischen Polyurethanen - nur um ca. 200% ändert.

Nachteilig ist an diesen Polyamid-Materialien jedoch, dass sie in einem Temperaturbereich, der in einem für den menschlichen Fuß unter Verwendung eines zwischenliegenden Innenschuhs vertretbaren Rahmen liegt, d.h. bis ca. 100°C, nicht warmverformbar sind.

Ein Schuh, der teilweise aus einem Kunststoff-Compound-Werkstoff besteht, ist beispielsweise in der US 2008/000109 A1 beschrieben. Hierbei ist ein Schuh gezeigt, bei dem schalenförmige Elemente in bekannter Weise aus Polyurethan oder Polypropylen bestehen, welchem in Bereichen ein Caprolactam-basiertes Polymer beigemischt sein kann; d.h. es sind ein Polyurethan- oder Polypropylen-Caprolactam-Compound-Werkstoff offenbart. Hierdurch wird eine Schale erzielt, welche abschnittsweise vergleichsweise steif ausgebildet ist und eine Erweichungstemperatur von >170°C aufweist, wobei in jenen Bereichen, in welchen das Kunststoff-Compound-Material vorgesehen ist, eine Erweichungstemperatur von unter 100°C erzielt werden soll. Ein derartiger Aufbau eines Schuhs, welcher zwingend unterschiedliche Materialzonen aufweist, ist nachteiligerweise jedoch aufwändig.

Aus der US 2004/0235586 A1 sind weiters Kunststoff-Gussteile, wie z.B. Fersen- bzw. Zehenkappen für Schuhe, bekannt, die aus einem Compound-Werkstoff bestehen, der eine Mischung aus thermoplastischen Elastomeren, thermoplastischen Ionomeren, thermoplastischem Polyurethan und duroplastischem, mit organischen Fasern modifiziertem Polyurethan aufweist. Hierdurch soll insbesondere die Härte und Abriebfestigkeit der Kunststoff-Gussteile erhöht werden.

Ebenso sind aus der US 2005/056669 A1 Kunststoffteile unter anderem für Fersen- bzw. Zehenkappen oder Sohlen bekannt, die aus einer Mischung aus ionomerischen Copolymeren mit organischen Säuren bzw. Salzen hievon bestehen, um eine hohe Steifigkeit und und ein hohes Rückstellvermögen zu erzielen.

Aus der US 2008/0000109 A1 hingegen ist ein Alpinskischuh bekannt, der eine steife Schale bestehend aus einem Kunststoffmaterial mit einer Erweichungstemperatur größer 170°C aufweist. Zudem ist zumindest ein Abschnitt vorgesehen, in welchem dem Basismaterial der Schale ein Caprolactam-Polyamid hinzugefügt ist, um die Erweichungstemperatur der Schale in dem speziellen Abschnitt auf unter 100°C abzusenken.

Ziel der vorliegenden Erfindung ist es demzufolge einen Skischuh, insbesondere einen Alpin- oder Langlaufschuh, mit zumindest einem schalenförmigen Element aus einem Compound-Werkstoff zu schaffen, welches in einem Temperaturbereich zwischen +20°C und -20°C hinreichende Steifigkeitseigenschaften aufweist und zudem bei Temperaturen von <100°C warmverformbar ist; weiters soll ein Verfahren zur Herstellung derartiger Elemente geschaffen werden.

Erfindungsgemäß wird dies dadurch erzielt, dass der Compound-Werkstoff eine Mischung aus Caprolactam-Polyamid und Ionomeren aufweist, so dass Kationen und Anionen der Ionomere Ionenbindungen bilden, wobei elastische Komponenten des Compound-Werkstoffs ein physikalisches Netz bilden, welches zwischen 60°C und 100°C lösbar ist, so dass das zumindest teilweise aus dem Compound-Werkstoff bestehende schalenförmige Element des Skischuhs < 100°C warmverformbar ist.

Bei dem erfindungsgemäßen Compound-Werkstoff wird demzufolge Caprolactam-Polyamid als Basiswerkstoff bzw. Hartsegment verwendet und diesem Basiswerkstoff werden Ionomere als Weichsegment zugesetzt.

Hierbei ist es insbesondere von Vorteil, wenn als Ionomere Copolymerisate von Ethylen mit Carbonsäure, insbesondere Acrylsäure, umfassend Metallionen, insbesondere Zink oder Natrium, vorgesehen sind. Kationen und Anionen der Ionomere bilden sodann Ionenbindungen, was den Vorteil hat, dass die elastischen Komponenten ein physikalisches Netz bilden, welches - abhängig davon, welches Ionomer konkret eingesetzt wird - üblicherweise zwischen 60°C und 100°C gelöst werden kann, so dass das Material hervorragend warmverformbar ist, nach dem Abkühlen sich jedoch die Ionenbindungen wieder ausbilden und damit die ursprüngliche Materialeigenschaft wiederhergestellt wird. Ionomere haben den Vorteil, dass sie hoch elastisch sind und ein Steifigkeitstemperaturverhalten in einer ähnlichen Größenordnung wie Polyamid Elastomere aufweisen, d.h. sie versteifen im Temperaturbereich von +20°C bis -20°C um ca. 200%.

Abhängig von der gewünschten Steifigkeit des Compound-Materials ist es von Vorteil, wenn der Gewichtsanteil der Ionomere zumindest 20%, vorzugsweise zwischen 25 und 70%, beträgt.

Um die Verarbeitbarkeit des Compound-Werkstoffs im Spritzgussverfahren zu verbessern, ist es günstig, wenn ein organisches und/oder anorganisches Kristallisationsbeschleunigungs-mittel, vorzugsweise mit einem Gewichtsanteil von 0,1 bis 1%, beigemischt ist. Derartige Kristallisationsbeschleunigungsmittel, auch Nukleierungsmittel genannt, sind insbesondere von Vorteil, wenn ein schalenförmiges Element mit unterschiedlichen Wandstärken, z.B. in der Größenordnung von 2mm bis 20mm, wie dies häufig bei Hartschalen eines Alpinskischuhs auftritt, hergestellt und dabei das schalenförmige Element des Schuhs im warmen Zustand von einem Werkzeugleisten zwangsentformt wird. Hierbei können ohne Beimischung eines Nukleierungsmittels aufgrund der unterschiedlichen Kristallisationseigenschaften des Caprolactam-Polyamids gegenüber dem Ionomeranteil Probleme auftreten. Als insbesondere vorteilhaft hat sich herausgestellt, wenn als Kristallisationsbeschleunigungsmittel Talkum und/oder ein niedermolekulares Polyamid beigemischt ist, wobei es hierbei insbesondere wiederum günstig ist, wenn als Kristallisationsbeschleunigungsmittel eine Mischung aus organischem und anorganischem Kristallisationsbeschleunigungsmittel vorgesehen ist.

Zur Herstellung eines schalenförmigen Elements, vorzugsweise im Spritzgussverfahren, ist demzufolge günstig, wenn im Wesentlichen eine Mischung aus 30 bis 45 Gewichts-% Caprolactam-Polyamid, 0,1 bis 1 Gewichts-% Kristallisationsbeschleunigsmittel und einem Rest von im Wesentlichen 55 bis 70 Gewichts-% Ionomere vorgesehen ist.

Um nach Möglichkeit gleichbleibende plastische Eigenschaften des Compound-Werkstoffs über einen weiten Temperaturbereich zu erhalten, hat sich gezeigt, dass es günstig ist, wenn ein thermoplastischer Kautschuk, insbesondere Ethylen-Propylen-Kautschuk (EPM) oder Ethylen-Propylen-Dien-Kautschuk (EPDM), beigemischt ist. Hierbei ist es insbesondere vorteilhaft, wenn der Gewichtsanteil des thermoplastischen Kautschuks im Wesentlichen 10 bis 30% beträgt.

Besonders bevorzugt ist hierbei, dass im Wesentlichen eine Mischung aus 30 bis 45 Gewichts-% Caprolactam-Polyamid, 0,1 bis 1 Gewichts-% Kristallisationsbeschleunigsmittel, 20 bis 30 Gewichts-% thermoplastischem Kautschuk, und einem Rest von im Wesentlichen 25 bis 35 Gewichts-% Ionomere vorgesehen ist.

Das Verfahren der eingangs angeführten Art ist dadurch gekennzeichnet, dass einem Caprolactam-Polyamid Ionomere beigemischt werden und anschließend das Compound-Material im Spritzgussverfahren geformt wird. Der Compound-Werkstoff, aus welchem das herzustellende schalenförmige Element zumindest teilweise besteht, hat somit nicht nur den Vorteil relativ gleicher Steifigkeitseigenschaften im relevanten Temperaturbereich und einer vergleichsweise niedrigen Erweichungstemperatur zwecks Warmverformung, sondern insbesondere ist vorteilhaft, dass der Compound -Werkstoff, der Caprolactam-Polyamid und Ionomere aufweist, im Spritzgussverfahren gut verarbeitbar ist und demzufolge die für die Herstellung von Schuhen erforderlichen schalenförmigen Elemente auf einfache Weise hergestellt werden können.

Die Mischung aus Caprolactam-Polyamid und Ionomeren kann in einem einstufigen Verfahren hergestellt werden, insbesondere indem Caprolactam-Polyamid mit dem Ionomer in einem der gewünschten Steifigkeit entsprechenden Mischungsverhältnis in einem Compoundier-Extruder beigemischt wird und somit ein Spritzgussgranulat hergestellt wird.

Wenn dem Caprolactam-Polyamid die Ionomere in einem zweistufigen Compoundierungsverfahren beigemischt werden, wobei in einem ersten Schritt im Wesentlichen 5 bis 15 Gewichts-% beigemischt werden, und in einem zweiten Schritt im Wesentlichen 25 bis 50 Gewichts-% jeweils bezogen auf das fertige Compound-Material beigemischt werden, wird insbesondere erreicht, dass im ersten Verfahrensschritt die Ionomere sich besonders fein im Caprolactam-Polyamid verteilen, wobei diese Verteilung aufgrund von Nebenvalenzbindungskräften bei der zweiten Beimischung beibehalten werden. Mittels einer sog. Compoundierung wird das Polyamid zunächst aufgeschmolzen und der Zusatzstoff, d.h. die Ionomere, beigefügt; anschließend werden Feststoffagglomerate üblicherweise zerteilt, sodann werden die Ionomere mit Polyamidschmelze benetzt und darauffolgend werden die Komponenten des Compound-Materials gleichmäßig verteilt. Zum Aufschmelzen des Caprolactam-Polyamids wird dieses üblicherweise auf ca. 220° bis 240°C erwärmt.

Zum Ausgleich der sehr unterschiedlichen Kristallisationseigenschaften von Caprolactam-Polyamid und dem Ionomeradditiv ist es von Vorteil, wenn in einer weiteren Compoundierungsstufe ein Kristallisationsbeschleunigungsmittel beigemischt wird. Hierdurch ergibt sich eine deutlich verbesserte Verarbeitbarkeit im Spritzgussverfahren. Darüber hinaus ist es, um die elastischen Eigenschaften des Compound-Materials in einem weiten Temperaturbereich möglichst stabil zu halten, weiters günstig, wenn in einer weiteren Compoundierungsstufe thermoplastischer Kautschuk beigemischt wird.

Nachstehend wird anhand von bevorzugten Ausführungsbeispielen die Erfindung noch näher erläutert. Im einzelnen zeigen in den Zeichnungen
Fig. 1 eine Seitenansicht eines Hartschalen-Alpinskischuhs, und
Fig. 2 eine Seitenansicht eines Langlaufschuhs.

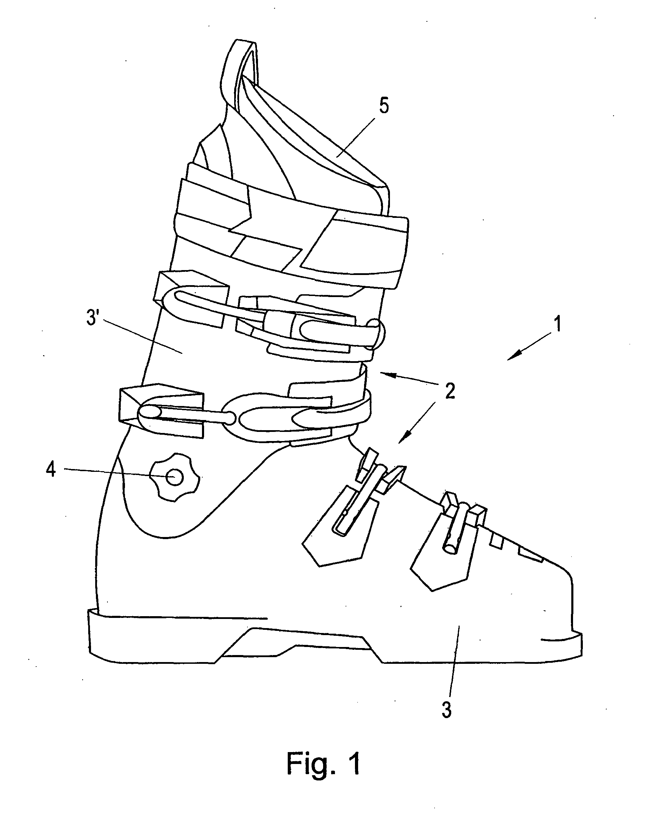

Fig. 1 zeigt einen bezüglich seines äußeren Erscheinungsbildes herkömmlichen Alpin-Hartschalenschuh mit zwei schalenförmigen Elementen 2, bei welchem eine im Wesentlichen den Fuß aufnehmende untere Schale 3 vorgesehen ist, an welcher eine im Wesentlichen den Unterschenkel im Bereich des Schienbeins aufnehmende Manschette 3' über ein Gelenk 4 schwenkbar gelagert ist. In den beiden schalenförmigen Elementen 2 ist ein weicher, gepolsterter Innenschuh 4 aufgenommen. Die beiden schalenförmigen Elemente 2 bestehen hierbei erfindungsgemäß aus einem Kunststoff-Compound-werkstoff, bei dem Caprolactam-Polyamid (auch PA 6 genannt) als Basiswerkstoff vorgesehen ist. Diesem Basiswerkstoff sind Ionomere mit einem Gewichtsanteil von 55 bis 70% beigemischt. Weiters ist der Kunststoff-Compound-Mischung ein Nukleierungs- bzw. Kristallisationsbeschleunigungsmittel, welches aus einer Mischung von Talkum und niedermolekularem Polyamid besteht, mit einem Gewichtsanteil von ca. 0,1 bis 1% beigemischt.

Weiters kann der Compound-Kunststoff einen Anteil thermoplastischem Kautschuks von ca. 20 bis 30% aufweisen, um den Versteifungsfaktor der schalenförmigen Elemente 2 in dem für die Anwendung des Alpinskischuhs relevanten Temperaturbereich von +20°C bis -20°C gering, d.h. vorzugsweise zwischen 150 und 200%, zu halten. Sofern dem Compound-Kunststoff thermoplastischer Kunststoff beigemischt, verringert sich der Anteil an Ionomeren entsprechend.

Mit Hilfe der Ausbildung der schalenförmigen Elemente 2 aus einem derartigen Kunststoff-Compound-Werkstoff kann zudem vorteilhafter Weise eine Anpassung der schalenförmigen Elemente 2 an den Fuß bzw. den Unterschenkel des Benutzers im angezogenen Zustand erfolgen, da die Erweichungstemperatur des erfindungsgemäßen Kunststoff-Compoundmaterials unter 100°C, vorzugsweise ca. 80 °C, beträgt. Demzufolge können die schalenförmigen Elemente 2 auf ihre Erweichungstemperatur erwärmt werden, während der Benutzer unter Zwischenlage des Innenschuhs 4 den Schuh trägt und somit eine individuelle Anpassung der schalenförmigen Elemente 2 an den Fuß bzw. den Unterschenkel des Benutzers erfolgen.

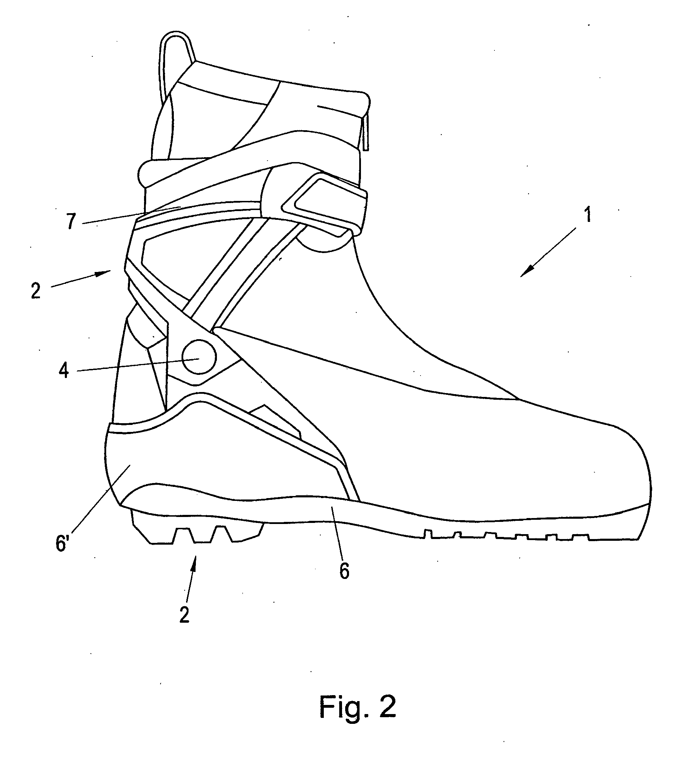

Gleiches gilt im Wesentlichen für sämtliche schalenförmige Elemente 2 eines in Fig. 2 gezeigten Langlaufschuhs 1, wobei hier insbesondere die Sohle 6 aus dem vorstehend beschriebenen Kunststoff-Compound-Material bestehen kann. Weiters ist jedoch auch vorteilhaft, dass eine Fersenkappe 6', welche gegebenenfalls auch einstückig mit der Sohle 6 ausgebildet sein kann, aus dem vorstehend beschriebenen Material bestehen kann. Darüber hinaus kann auch eine Manschette 7, welche ähnlich der Manschette 3' an der unteren Schale 6' über ein Gelenk 4 angelenkt ist, aus dem Kunststoff-Compound-Material bestehen, um auf einfache Weise eine individuelle Anpassung an das Bein des Benutzers zu erzielen und zugleich jedoch im relevanten Temperaturbereich möglichst gleichbleibende Steifigkeitseigenschaften zu gewährleisten.

## Patentansprüche

1. Skischuh (1), insbesondere Alpin- oder Langlaufschuh, mit einem schalenförmigen Element (2), das zumindest teilweise aus einem Kunststoff-Compound-Werkstoff besteht, **dadurch gekennzeichnet, dass** der Compound-Werkstoff eine Mischung aus Caprolactam-Polyamid und Ionomeren aufweist, so dass Kationen und Anionen der Ionomere Ionenbindungen bilden, wobei elastische Komponenten des Compound-Werkstoffs ein physikalisches Netz bilden, welches zwischen 60°C und 100°C lösbar ist, so dass das zumindest teilweise aus dem Compound-Werkstoff bestehende schalenförmige Element (2) des Skischuhs (1) < 100°C warmverformbar ist.

2. Skischuh nach Anspruch 1, **dadurch gekennzeichnet, dass** als Ionomere Copolymerisate von Ethylen mit Carbonsäure, insbesondere Acrylsäure, umfassend Metallionen, insbesondere Zink oder Natrium, vorgesehen sind.

3. Skischuh nach Anspruch 1 oder 2, **dadurch gekennzeichnet,**
**dass** der Gewichtsanteil der Ionomere zumindest 20%, vorzugsweise zwischen 25 und 70%, beträgt.

4. Skischuh nach einem der Ansprüche 1 bis 3, **dadurch gekennzeichnet, dass** ein organisches und/oder anorganisches Kristallisationsbeschleunigungsmittel, vorzugsweise mit einem Gewichtsanteil von 0,1 bis 1%, beigemischt ist.

5. Skischuh nach Anspruch 4, **dadurch gekennzeichnet, dass** als Kristallisationsbeschleunigungsmittel Talkum und/oder ein niedermolekulares Polyamid beigemischt ist.

6. Skischuh nach Anspruch 4 oder 5, **dadurch gekennzeichnet,**
**dass** als Kristallisationsbeschleunigungsmittel eine Mischung aus organischem und anorganischem Kristallisationsbeschleunigungsmittel vorgesehen ist.

7. Skischuh nach einem der Ansprüche 1 bis 6, **gekennzeichnet durch** eine Mischung im Wesentlichen bestehend aus:
30 bis 45 Gewichts-% Caprolactam-Polyamid, 0,1 bis 1 Gewichts-% Kristallisationsbeschleunigsmittel und einem Rest von im Wesentlichen 55 bis 70 Gewichts-% Ionomere.

8. Skischuh nach einem der Ansprüche 1 bis 6, **dadurch gekennzeichnet, dass** ein thermoplastischer Kautschuk, insbesondere Ethylen-Propylen-Kautschuk (EPM) oder Ethylen-Propylen-Dien-Kautschuk (EPDM), beigemischt ist.

9. Skischuh nach Anspruch 8, **dadurch gekennzeichnet, dass** der Gewichtsanteil des thermoplastischen Kautschuks im Wesentlichen 10 bis 30% beträgt.

10. Skischuh nach einem der Ansprüche 1 bis 6, 8 oder 9, **gekennzeichnet durch** eine Mischung im Wesentlichen bestehend aus: 30 bis 45 Gewichts-% Caprolactam-Polyamid, 0,1 bis 1 Gewichts-% Kristallisationsbeschleunigsmittel, 20 bis 30 Gewichts-% thermoplastischem Kautschuk, und einem Rest von im Wesentlichen 25 bis 35 Gewichts-% Ionomere.

11. Verfahren zur Herstellung eines Elements (2) eines Skischuhs (1) gemäß einem der Ansprüche 1 bis 10, **dadurch gekennzeichnet, dass** einem Caprolactam-Polyamid Ionomere beigemischt werden und anschließend das Compound-Material im Spritzgussverfahren geformt wird.

12. Verfahren nach Anspruch 11, **dadurch gekennzeichnet, dass** dem Caprolactam-Polyamid die Ionomere in einem zweistufigen Compoundierungsverfahren beigemischt werden, wobei in einem ersten Schritt im Wesentlichen 5 bis 15 Gewichts-% beigemischt werden, und in einem zweiten Schritt im Wesentlichen 25 bis 50 Gewichts-% jeweils bezogen auf das fertige Compound-Material beigemischt werden.

13. Verfahren nach Anspruch 11 oder 12, **dadurch gekennzeichnet, dass** in einer weiteren Compoundierungsstufe ein Kristallisationsbeschleunigungsmittel beigemischt wird.

14. Verfahren nach einem der Ansprüche 11 bis 13, **dadurch gekennzeichnet, dass** in einer weiteren Compoundierungsstufe thermoplastischer Kautschuk beigemischt wird.

## Claims

1. A ski boot (1), particularly an alpine or cross-country ski boot with an element (2) in shell form which at least partly consists of a plastics compound material, **characterized in that** the compound material comprises a mixture of caprolactam polyamide and ionomers, such that cations and anions of the ionomers form ion bonds, wherein elastic components of the compound material form a physical network that is disruptable between 60°C and 100°C, so that the element (2) in shell form of ski boot (1) at least partly consisting of said compound material is thermoformable at a temperature of <100°C.

2. A ski boot according to claim 1, **characterized in that** said ionomers are copolymerisates of ethylene with carboxylic acid, particularly acrylic acid, comprising metal ions, particularly zinc or sodium.

3. A ski boot according to claims 1 or 2, **characterized in that** the weight ratio of ionomers is at least 20%, preferably between 25 and 70%.

4. A ski boot according to any one of claims 1 to 3, **characterized in that** an organic and/or inorganic crystallization accelerating agent is added, preferably at a weight ratio of 0.1 to 1%.

5. A ski boot according to claim 4, **characterized in that** talc and/or a low molecular polyamide are added as said crystallization accelerating agent.

6. A ski boot according to claims 4 or 5, **characterized in that** said crystallization accelerating agent is a mixture of organic and inorganic crystallization accelerating agents.

7. A ski boot according to any one of claims 1 to 6, **characterized by** a mixture essentially consisting of:
30 to 45% by weight of caprolactam polyamide, from 0.1 to 1% by weight of crystallization accelerating agent, and a balance of essentially 55 to 70% by weight of ionomers.

8. A ski boot according to any one of claims 1 to 6, **characterized in that** a thermoplastic rubber, particularly ethylene propylene monomer rubber (EPM) or ethylene propylene diene monomer rubber (EPDM) are added.

9. A ski boot according to claim 8, **characterized in that** the weight ratio of said thermoplastic rubber is essentially 10 to 30%.

10. A ski boot according to any one of claims 1 to 6, 8 or 9, **characterized by** a mixture essentially consisting of:
30 to 45% by weight of caprolactam polyamide, 0.1 to 1% by weight of crystallization accelerating agent, 20 to 30% by weight of thermoplastic rubber, and a balance of essentially 25 to 35% by weight of ionomers.

11. A method for producing an element (2) for a ski boot (1) according to any one of claims 1 to 10, **characterized in that** ionomers are added to a caprolactam polyamide and this compound material is subsequently formed in an injection molding process.

12. A method according to claim 11, **characterized in that** said ionomers are added to said caprolactam polyamide in a two-step compounding process, wherein in a first step essentially 5 to 15% by weight are admixed and in a second step essentially 25 to 50% by weight are admixed, each with respect to the finished compound material.

13. A method according to claims 11 or 12, **characterized in that** a crystallization accelerating agent is added in a further compounding step.

14. A method according to any one of claims 11 to 13, **characterized in that** thermoplastic rubber is added in a further compounding step.

## Revendications

1. Chaussure de ski (1), en particulier chaussure de ski alpin ou de ski de fond, comportant un élément (2) en forme de coque, qui au moins partiellement est constitué d'un matériau composat de matières plastiques, **caractérisée en ce que** le matériau composat comprend un mélange de caprolactame-polyamide et d'ionomères, de façon que des cations et des anions des ionomères forment des liaisons ioniques, des composants élastiques du matériau composat formant un réseau physique, qui est soluble entre 60 et 100°C, de telle sorte que l'élément (2) en forme de coque, au moins partiellement constitué du matériau composat, de la chaussure de ski (1), puisse subir une déformation à chaud à < 100°C.

2. Chaussure de ski selon la revendication 1, **caractérisée en ce qu'**on prévoit en tant qu'ionomères des copolymères de l'éthylène et d'un acide carboxylique, en particulier l'acide acrylique, comprenant des ions métalliques, en particulier du zinc ou du sodium.

3. Chaussure de ski selon la revendication 1 ou 2, **caractérisée en ce que** la proportion pondérale des ionomères est d'au moins 20 %, de préférence comprise entre 25 et 70 %.

4. Chaussure de ski selon l'une des revendications 1 à 3, **caractérisée en ce qu'**un accélérateur de cristallisation organique et/ou inorganique est ajouté, de préférence selon une proportion pondérale de 0,1 à 1 %.

5. Chaussure de ski selon la revendication 4, **caractérisée en ce qu'**on ajoute en tant qu'accélérateur de cristallisation du talc et/ou un polyamide à faible masse moléculaire.

6. Chaussure de ski selon la revendication 4 ou 5, **caractérisée en ce qu'**on prévoit en tant qu'accélérateur de cristallisation un mélange d'un accélérateur de cristallisation organique et d'un accélérateur de cristallisation inorganique.

7. Chaussure de ski selon l'une des revendications 1 à 6, **caractérisée par** un mélange constitué pour l'essentiel de 30 à 45 % en poids de caprolactame-polyamide, de 0,1 à 1 % en poids d'accélérateur de cristallisation, et d'un complément constitué pour l'essentiel de 55 à 70 % en poids d'ionomères.

8. Chaussure de ski selon l'une des revendications 1 à 6, **caractérisée en ce qu'**on ajoute un caoutchouc thermoplastique, en particulier un caoutchouc éthylène-propylène (EPM) ou un caoutchouc éthylène-propylène-diène (EPDM).

9. Chaussure de ski selon la revendication 8, **caractérisée en ce que** la proportion pondérale du caoutchouc thermoplastique est pour l'essentiel de 10 à 30 %.

10. Chaussure de ski selon l'une des revendications 1 à 6, 8 ou 9, **caractérisée par** un mélange constitué pour l'essentiel de 30 à 45 % en poids de caprolactame-polyamide, de 0,1 à 1 % en poids d'un accélérateur de cristallisation, de 20 à 30 % en poids d'un caoutchouc thermoplastique, et d'un complément constitué pour l'essentiel de 25 à 35 % en poids d'ionomères.

11. Procédé de fabrication d'un élément (2) d'une chaussure de ski (1) selon l'une des revendications 1 à 10, **caractérisé en ce qu'**on ajoute des ionomères à un caprolactame-polyamide, puis on moule le matériau composat par un procédé de moulage par injection.

12. Procédé selon la revendication 11, **caractérisé en ce qu'**on ajoute au caprolactame-polyamide les ionomères dans un procédé de compoundage en deux étapes, dans lequel on ajoute pour l'essentiel dans une première étape 5 à 15 % en poids, et dans une deuxième étape on ajoute pour l'essentiel 25 à 50 % en poids, dans chaque cas par rapport au matériau composat fini.

13. Procédé selon la revendication 11 ou 12, **caractérisé en ce que**, dans une autre étape de compoundage, on ajoute un accélérateur de cristallisation.

14. Procédé selon l'une des revendications 11 à 13, **caractérisé en ce que**, dans une autre étape de compoundage, on ajoute un caoutchouc thermoplastique.
